# DEMANDE DE BREVET EUROPEEN

(11) **EP 1 657 929 A1**
(43) Date de publication de la demande: **17.05.2006**
(21) Numéro de dépôt: 05100072.7
(22) Date de dépôt: 07.01.2005
(51) Int. Cl.: H04N 7/24, H04N 7/52, H04N 5/60, H04N 5/04

(54) **Dispositif et méthode de synchronisation de différentes parties d'un service numérique**

(30) Priorité: 16.11.2004 FR 0412169; 16.11.2004 EP 04292712
(71) Demandeur: Thomson Licensing, 92100 Boulogne-Billancourt (FR)
(72) Inventeur: Leyendecker, Philippe, 92648 BOULOGNE CEDEX (FR); Zwing, Rainer, 92648 BOULOGNE CEDEX (FR); Morvan, Patrick, 92648 BOULOGNE CEDEX (FR); Desert, Sebastien, 92648 BOULOGNE CEDEX (FR); Doyen, Didier, 92648 BOULOGNE CEDEX (FR); Abelard, Franck, 92648 BOULOGNE CEDEX (FR)
(74) Mandataire: Le Dantec, Claude

(57) **Abrégé**

L'invention concerne un dispositif de reproduction (21), un dispositif (20) agissant comme une source de services numériques. Elle concerne également une méthode de synchronisation de deux parties d'un service numérique dans un système comprenant un dispositif source selon l'invention et au moins un dispositif de reproduction selon l'invention.

Selon l'invention, le dispositif de reproduction (21) comprend des moyens pour recevoir des données constituant au moins une partie d'un service numérique provenant d'un dispositif source de services numériques (20), des moyens pour traiter (210) au moins une partie des données reçues, des moyens (211) pour reproduire une sortie d'au moins une partie du service numérique, le temps de traitement et de reproduction des données introduisant un retard dans la sortie des données reproduites. Ce dispositif comprend en outre des moyens de communication (213) pour informer le dispositif source du retard introduit.

## Description

### 1. Domaine de l'invention

L'invention concerne un dispositif et une méthode de synchronisation de différentes parties d'un service numérique. L'invention peut, par exemple, concerner la synchronisation audio/vidéo d'un service numérique audiovisuel.

### 2. Etat de l'art

Pendant des années, les technologies relatives aux écrans étaient basées sur des écrans à tube. Ces technologies étaient alors uniquement analogiques. Depuis les années 1990, les technologies numériques sont de plus en plus présentes dans la chaîne de l'image depuis l'acquisition par la caméra du signal vidéo jusqu'à son affichage sur les écrans (par exemple des écrans 100 Hz utilisant de la compensation de mouvement). Au départ, aucune de ces nouvelles technologies n'introduisait de retard significatif sur la vidéo. La synchronisation audio/vidéo (notée A/V dans la suite du document) est réalisée par le décodeur, en faisant l'hypothèse que les flux audio et vidéo fournis par le décodeur sont reproduits par le dispositif de reproduction audiovisuel de manière instantanée. Dans le cas des décodeurs, le principe de la synchronisation A/V consiste à utiliser des marqueurs temporels (« Program Clock Reference » et « Presentation Time Stamps » en anglais) incrustés par le codeur MPEG dans les paquets audio et vidéo permettant au décodeur de présenter la vidéo et l'audio par rapport à une référence temporelle commune. L'annexe D de la norme ISO/IEC 13818-1 décrit en détail comment réaliser cette synchronisation A/V (appelée « LIPSYNC » en anglais). Aujourd'hui, la procédure de réglage du module de synchronisation A/V d'un décodeur consiste à décoder des paquets audio et vidéo issus d'un flux MPEG de test et à les présenter à un dispositif de reproduction (par exemple un téléviseur à tube) dont le temps de réponse est considéré comme instantané. De même, dans le cas des lecteurs DVD, la synchronisation A/V est assurée par le lecteur lui-même qui garantit la synchronisation des flux audio et vidéo à la sortie du lecteur.

Les avancées récentes en matière de technologie d'écrans ont permis de mettre sur le marché une série de nouveaux écrans et dispositifs de reproduction audiovisuel plus ou moins complexes parmi lesquels:
- Des dispositifs de reproduction audiovisuel (par exemple le « home cinema » en anglais), dans lesquels le signal audio peut être fourni sous une forme décodée (format PCM : modulation par impulsions codées - « Pulse Code Modulation » en anglais) ou sous une forme encodée (par exemple le Dolby Digital).
- La télévision haute définition (notée HD dans la suite du document pour « High Definition » en anglais) qui devient de plus en plus populaire dans certains pays. Elle pourrait devenir un marché de masse avec par exemple la technologie MPEG-4 qui permet de diminuer les coûts. Plusieurs formats HD devraient coexister avec le format de définition standard SD (notée SD dans la suite du document pour « Standard Definition » en anglais). Le format HD requiert des traitements vidéo significatifs dans l'écran avant affichage de la vidéo, pouvant introduire des retards.
- De nombreuses technologies d'écrans (par exemple les LCD, LCOS, DLP, Plasma, ...) sont proposées sur le marché pour les deux formats HD et SD. Ces différents écrans requièrent leurs propres traitements vidéo pour un rendu optimal et peuvent ainsi introduire des retards.

Dans le passé, des études sur le système audio-visuel ont montré que l'être humain est sensible à des déphasages A/V. L'étude menée par le laboratoire Bell en 1940 a ainsi montré qu'une gêne est présente pour un retard audio supérieur à 100ms ou une avance audio supérieure à 35ms. En effet, l'être humain est naturellement plus tolérant à un retard audio qu'à une avance car il n'est pas naturel d'entendre un son d'un évènement avant de le voir s 'afficher sur l'écran. Par la suite et afin d'avoir des règles communes, l'ITU a normalisé les erreurs de synchronisation A/V acceptables et gênantes sur toute la chaîne A/V. En 1993, la norme ITU[DOC11/59] définit l'intervalle de détectabilité comme étant un retard audio supérieur à 100ms ou une avance audio supérieure à 20ms. L'intervalle de gêne est, quant à lui, défini comme étant un retard audio supérieur à 160ms ou une avance audio supérieure à 40ms. En 1998, l'ITU a relâché sans raison particulière l'intervalle de détectabilité comme étant un retard audio supérieur à 125ms ou une avance audio supérieure à 45ms. L'intervalle de gêne est alors défini comme étant un retard audio supérieur à 185ms ou une avance audio supérieure à 90ms. Ces intervalles sont définis par la norme ITU-R BT 1359-1.

Aujourd'hui, l'ATSC (organisation internationale pour le développement de standards de la télévision numérique - « Advanced Television System Commitee » en anglais) indique que cette norme n'est pas adaptée et n'est pas conforme à l'étude réalisée par BELL. Elle propose donc de normaliser les erreurs de synchronisation dans l'intervalle [-90ms, +30ms] à répartir sur la chaîne A/V de la manière suivante : [-45ms, +15ms] pour l'acquisition et [-45ms, +15ms] pour le codeur/décodeur/TV.

Aujourd'hui, des dispositifs de reproduction vidéo (par exemple les écrans LCD) introduisent des retards de plusieurs dizaines de millisecondes (parfois près d'une centaine) dans la chaîne de traitement vidéo. Le retard introduit peut varier de manière significative d'un dispositif à l'autre, il peut également varier en fonction du format de l'image qui peut être entrelacée (par exemple 576i25 pour SD ou 1080i25 pour HD) ou progressive (par exemple 576p25 pour SD ou 720p50 pour HD), notamment quand l'écran est équipé d'une fonction de désentrelacement. Ces traitements nécessitent l'utilisation de mémoires d'images (par exemple les FIFO, SDRAM...) qui ont pour conséquence d'augmenter les retards du signal vidéo par rapport au signal audio. Ceci implique qu'un signal audio précède souvent le signal vidéo auquel il est associé. En effet, de leur côté, les dispositifs de reproduction audio n'introduisent généralement pas de retard significatif lors d'une utilisation normale. Ils peuvent introduire des retards si l'on ajoute des effets sonores. Cependant, ces retards restent tolérables pour l'utilisateur.

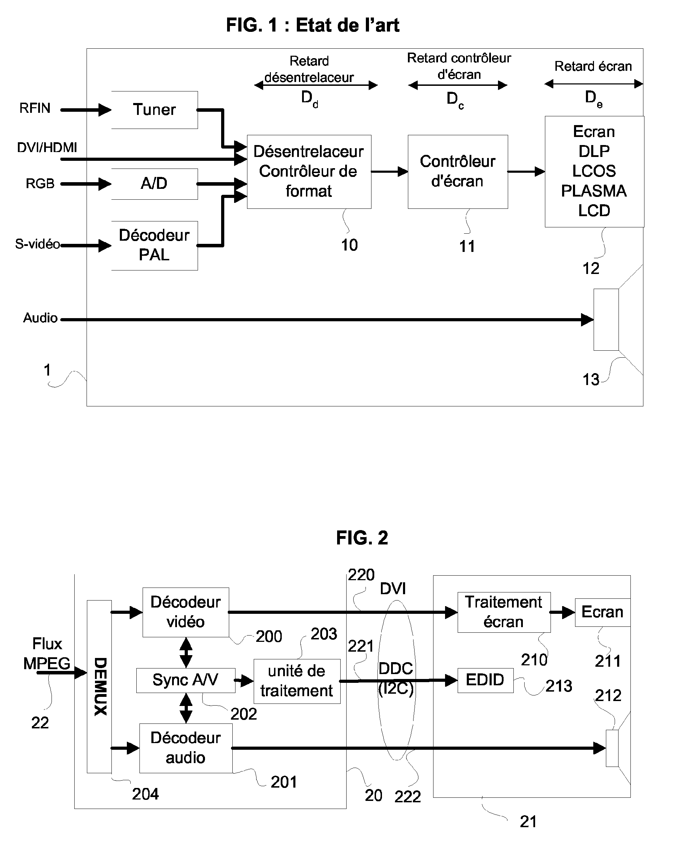

Contrairement aux écrans à tube, les nouveaux écrans plats utilisés actuellement ne répondent donc pas instantanément. En effet, les différents modules qui les composent introduisent des retards. La figure 1 représente, sous forme de blocs 10, 11 et 12, certains modules d'un dispositif de reproduction audiovisuel 1 (par exemple un téléviseur à écran plat) selon l'état de l'art. Ce dispositif inclut un dispositif de reproduction vidéo 12 (par exemple un écran) et un dispositif de reproduction audio 13 (par exemple une enceinte externe ou intégrée). Les modules classiques du dispositif de reproduction vidéo (par exemple un tuner, un décodeur PAL et des convertisseurs A/D) ne seront pas décrits davantage. Les modules 10, 11 et 12 introduisent des retards vidéo qui peuvent être fixes ou variables de trame en trame. Ces retards varient en fonction des traitements appliqués ainsi qu'en fonction du type d'écran. S'ils ne sont pas compensés, ils vont provoquer des erreurs de synchronisation A/V détectables par les utilisateurs car se situant en dehors de l'intervalle de tolérance tel que défini précédemment.

Le premier module 10 de désentrelacement et de contrôle de format convertit une vidéo entrelacée en une vidéo progressive et adapte la résolution du signal d'entrée à celle de l'écran (par exemple le passage de 1920x1080i à 1280x720p). Ce bloc utilise une mémoire de trame (SDRAM, DDRAM) qui introduit un retard variable (D_{d}) en fonction du format vidéo (entrelacé/progressif, 50Hz/60Hz).

Le deuxième module 11 de contrôleur d'écran convertit une vidéo progressive en un format compatible pour l'écran. Le contrôleur adresse l'écran et effectue également des traitements d'amélioration de la qualité d'image. Ceux-ci introduisent souvent des retards D_{c} qui dépendent du type d'écran.
Ainsi, dans le cas des écrans LCD-LCOS (LCD signifie écran à cristaux liquides - « Liquid Cristal Display » en anglais et LCOS signifie cristaux liquides sur silicium - « Liquid Cristal On Silicium » en anglais), on peut appliquer les traitements suivants qui introduisent des retards:
o Technique d'accentuation (connue sous le nom d' « overdriving » en anglais) pour améliorer les temps de réponse du cristal liquide lorsqu'il doit passer d'un niveau de gris à un autre. Cette opération qui utilise une mémoire de trame introduit un retard fixe Rc_lcd_overdriving.
o Le doublage de trame dans les systèmes à 3 valves LCOS est couramment utilisé pour réduire les effets de scintillement large zone («large area flicker» en anglais). Cette opération qui utilise une mémoire de trame introduit un retard fixe Rc_lcos_double.
Dans le cas des écrans séquentiels couleur DLP™-LCOS (DLP signifie procédé numérique de traitement de la lumière pour « Digital Light Processing » en anglais - LCOS séquentiel) , les traitements et opérations suivantes introduisent des retards :
o La conversion vers du séquentiel couleur réalisée à l'aide d'une mémoire de trame qui introduit un retard fixe Rc_dlp-lcos_sequential.
o L'adressage de l'écran DLP réalisé par plans binaires (sub-field - bit plane) successifs. Cette opération introduit un retard fixe Rc-dlp_bitplane.
Dans le cas des écrans plasma, les traitements et opérations suivantes introduisent des retards dus à:
o L'adressage de l'écran par sous-balayages successifs. Cette opération introduit un retard Rc_plasma_bitplane.
o La compensation de mouvement pour réduire les défauts de faux-contour et les effets de trainage. Cette opération qui utilise une mémoire de trame introduit un retard fixe Rc_piasma_artefact.
De même, les écrans OLED ( diodes électroluminescentes organiques - « Organic Light Emitting Diode » en anglais) peuvent introduire des retards.
Le troisième module 12 est constitué par l'écran lui-même. La lumière émise par l'écran LCD/LCOS est obtenue par modulation de la tension appliquée au cristal liquide. Dans le cas d'un DMD™ (dispositif à micro-miroirs - « Digital Micro-mirror Device » en anglais), la lumière est modulée de façon binaire grâce à des micro-miroirs qui pivotent. Dans le cas d'un panneau PLASMA, la lumière est également modulée de façon binaire par excitation d'un gaz. La lumière réagit donc avec un retard par rapport à la modulation. Ce retard dépend principalement des propriétés physiques des constituants de l'écran (cristal liquide, gaz ...). En outre, certains écrans intègrent aussi une mémoire interne (DLP - LCOS séquentiel) qui provoque un retard supplémentaire. L'écran introduit donc des retards De directement liés à son type.
Ainsi les écrans LCD-LCOS introduisent entre autres les retards suivants:
o L'écran étant adressé ligne après ligne, la dernière ligne est rafraîchie une période trame après la première ligne. Cette opération d'adressage introduit un retard fixe Re_Icd_adressage.
o Le cristal liquide met un certain temps à s'établir après l'application de la tension de modulation. Ce temps se décompose en un retard et un temps d'établissement. Ces 2 temps dépendent du niveau de transition de gris entre la trame précédente et la trame courante. Ces deux temps s'additionnent pour donner un retard variable Re_lcd_cristal-liquide.
D'autres type d'écrans (par exemple les panneaux plasma, DLP, OLED) peuvent introduire d'autres types de retards.
Ainsi, les écrans plasma introduisent entre autres le retard suivant:
o Le gaz enfermé dans l'écran a un temps de réponse qui varie suivant le contenu vidéo et qui correspond donc à un retard variable Re_plasma_gaz.
Les écrans DLP™ introduisent notamment les retards suivants:
o Le dispositif d'affichage contient une mémoire interne et est adressé sous forme de sous-balayage. Cela introduit un retard fixe Re_dlp_adressage.
o Le DMD™ a des temps de réponse très rapides. Il n'introduit aucun retard particulier.
Le tableau ci-dessous récapitule des exemples de différents type de retards pour différents écrans. Dans le tableau T représente la période trame (20ms/50hz, 16,7ms/60Hz)

| Retards (D) | LCD | 3-LCOS | PLASMA | DLP™ | 1-LCOS 6x (300Hz/360Hz) |
|---|---|---|---|---|---|
| Désentrelaceur (retard D_{d}) | 0 si vidéo progressive T si vidéo entrelacée | 0 si vidéo progressive T si vidéo entrelacée | 0 si vidéo progressive T si vidéo entrelacée | 0 si vidéo progressive T si vidéo entrelacée | 0 si vidéo progressive T si vidéoentrelacée |
| Contrôleur (retard D_{c}) | | | | | |
| Rc_Icd_overdriving | T | T | | | |
| Rc_Icos_double | | T | | | |
| Rc_dlp_lcos_sequential | | | | T | T |
| Rc_dlp_bitplane | | | | T | |
| Rc_plasma_bitplane | | | T | | |
| Rc_plasma_artefact | | | 2T | | |
| Ecran (retard De) | | | | | |
| Re_lcd_adressage | T | T | | | <T/6 |
| Re_lcd_cristal-liquide | T-> 3T | T-> 3T | | | |
| Re_plasma_gaz | | | T/2 | | |
| Re_dlp_adressage | | | | T/6 | |
| Total | 3T-> 6T | 4T-> 7T | 3.5T ->4.5T | 2 ->3T | <3T |
| 50Hz → T=20ms | 60ms | 80ms | 70ms | 40ms | < 60ms |
| 60Hz → T=16,7ms | → 120ms | → 140ms | →90ms | →60ms | < 50ms |
| | 50ms | 70ms | 60ms | 30ms | |
| | →100ms | →117ms | →75ms | →50ms | |

Suivant les technologies d'écran que l'on utilise on peut donc avoir des retards sur la vidéo plus ou moins importants, fixes ou variables de trame en trame en fonction du contenu de l'image (par exemple les niveaux de gris). Ces retards peuvent également varier en fonction du format vidéo. Dans le cas de la télévision ou des DVDs, il existe 4 formats possibles :
o 50 Hz entrée entrelacée ;
o 50 Hz entrée progressive ;
o 60 Hz entrée entrelacée ;
o 60 Hz entrée progressive.
Ces retards entre les flux audio et vidéo dépendent également du format audio que l'on utilise (par exemple MPEG1, MPEG2 couche 1 et 2, DOLBY AC-3). Ils peuvent provoquer des erreurs de synchronisation A/V hors gabarit (i.e. en dehors de l'intervalle de tolérance) très gênantes pour le confort de l'utilisateur.
L'analyse ci-dessus montre qu'il est donc nécessaire de synchroniser les flux A/V dans le but d'améliorer le confort de perception de l'utilisateur et de maintenir le retard (resp. l'avance) dans la reproduction du flux vidéo par rapport au flux audio dans l'intervalle de tolérance défini par les normes. Plus généralement, il est nécessaire de synchroniser les différentes parties d'un service numérique afin de maintenir le retard (resp. l'avance) dans la reproduction d'une des parties du service par rapport à l'autre dans un intervalle de tolérance pour que ce retard (resp. cette avance) ne soit pas une gêne pour l'utilisateur.

### 3. Résumé de l'invention

L'invention a pour but de pallier ces inconvénients de l'art antérieur. A cet effet, la présente invention propose un dispositif et une méthode de synchronisation de plusieurs parties d'un service numérique qui tiennent compte de retards introduits par les différents traitements appliqués sur au moins une partie du service numérique ainsi que de retards introduits par les systèmes de reproduction eux-mêmes. Le but est d'éviter de sortir des intervalles de tolérance qui provoquent une gêne pour l'utilisateur.

A cet effet, l'invention propose un dispositif de reproduction de données correspondant à au moins un service numérique comprenant des moyens pour recevoir des données constituant au moins une partie d'un service numérique provenant d'un dispositif source de services numériques, des moyens pour traiter au moins une partie des données reçues, des moyens pour reproduire une sortie d'au moins une partie du service numérique, le temps de traitement et de reproduction des données introduisant un retard dans la sortie des données reproduites. Selon l'invention, le dispositif de reproduction comprend en outre des moyens de communication pour informer le dispositif source du retard introduit.

Selon un mode de réalisation préféré, le dispositif de reproduction est un téléviseur, le service numérique est un service audiovisuel, et les données traitées sont des données vidéo organisées en trames. Par ailleurs, un des moyens pour reproduire une sortie d'au moins une partie du service numérique est un écran de préférence un écran plat tel qu'un écran à cristaux liquides (LCD), un écran plasma, un écran OLED, un écran DLP.

Selon une caractéristique particulière, un des moyens pour traiter au moins une partie des données reçues est un désentrelaceur.

Avantageusement, une valeur du retard est stockée dans une mémoire non volatile du dispositif de reproduction. Selon une caractéristique particulière, la mémoire non volatile est une mémoire EPROM.

Selon un mode de réalisation préféré, une valeur du retard se présente sous la forme d'un descripteur EDID.

Préférentiellement, les moyens de communication pour informer le dispositif source du retard introduit comprennent une liaison utilisant le protocole DDC ou le protocole CEC. Le décodeur vient récupérer la valeur du retard stockée sous forme de descripteur EDID via une liaison DDC.

L'invention concerne également un dispositif agissant comme une source de services numériques, comprenant des moyens pour sortir des données constituant une première partie d'un service numérique, des seconds moyens pour sortir des données constituant une deuxième partie du service numérique, des moyens pour communiquer avec un dispositif de reproduction des données constituant la première partie du service numérique. Le dispositif source comprend en outre des moyens pour appliquer un retard programmable sur les données de sortie constituant la deuxième partie du service numérique, des moyens pour recevoir de la part du dispositif de reproduction des données constituant la première partie du service numérique une indication de retard et des moyens pour programmer les moyens pour appliquer un retard programmable conformément à l'indication reçue de retard.

Selon un mode de réalisation particulier, le dispositif agissant comme une source de services numériques est un décodeur numérique. Selon un autre mode de réalisation, le dispositif agissant comme une source de services numériques est un lecteur DVD.

Selon un mode de réalisation préféré, les données constituant la première partie du service numérique sont des données vidéo et les données constituant la deuxième partie du service numérique sont des données audio.

Selon un autre mode de réalisation, les données constituant la première partie et la deuxième partie du service numérique sont des données vidéo.

Préférentiellement, les moyens pour appliquer un retard programmable compensent un retard dû à un ou plusieurs éléments suivants des moyens de reproduction:
- un module de désentrelacement des données vidéo (10) ;
- un contrôleur de format (10) ;
- un contrôleur d'écran (11);
- un l'écran (12).

Selon une caractéristique particulière, les moyens pour appliquer un retard programmable contiennent une mémoire qui stocke temporairement les données constituant la deuxième partie du service numérique avant de les restituer conformément à l'indication de retard reçue.

Enfin, l'invention concerne une méthode de synchronisation de deux parties d'un service numérique dans un système comprenant un dispositif de source et au moins un dispositif de reproduction, où le dispositif source comprend des premiers moyens pour sortir des données constituant la première partie du service numérique, des second moyens pour sortir les données constituant la deuxième partie du service numérique, des moyens pour communiquer avec le dispositif de reproduction des données constituant la première partie du service numérique, des moyens pour appliquer un retard programmable sur les données de sortie constituant la deuxième partie du service numérique,
et où le dispositif de reproduction comprend des moyens pour recevoir les données constituant au moins une première partie du service numérique provenant du dispositif source de services numériques, des moyens pour traiter au moins une partie des données reçues pour reproduire au moins une partie du service numérique,
comprenant les étapes suivantes:
- au niveau du dispositif de reproduction, transmettre au dispositif source le retard total introduit par le dispositif de reproduction lors du traitement et de la reproduction des données reçues constituant au moins une première partie du service numérique ; et
- au niveau du dispositif source, programmer le retard programmable, en utilisant les indications de retard reçues, pour retarder la sortie des données constituant la deuxième partie du service numérique.

Selon un mode de réalisation particulier, une partie du retard est due aux caractéristiques de l'écran et peut être estimée pour chaque trame dans le cas des écrans à cristaux liquides selon les étapes suivantes :
- Calcul pour chaque pixel de l'écart de tension entre deux trames successives.
- Estimation pour chaque pixel du temps de réponse entre deux trames à partir .
- Création d'un histogramme des retards sur l'ensemble des pixels
- Calcul d'un retard moyen à partir dudit histogramme.

Selon une caractéristique particulière, les données constituant la première partie du service numérique sont des données vidéo et les données constituant la deuxième partie du service numérique sont des données audio.

Selon une autre caractéristique, les données constituant la première partie du service numérique et la deuxième partie du service numérique sont des données vidéo.

### 4. Listes des figures

L'invention sera mieux comprise et illustrée au moyen d'exemples de modes de réalisation et de mise en oeuvre avantageux, nullement limitatifs, en référence aux figures annexées sur lesquelles :
- la figure 1, déjà décrite, représente un schéma d'un téléviseur à écran plat selon l'état de l'art;
- la figure 2 représente un dispositif de réception et de reproduction d'un service numérique audio/vidéo selon l'invention qui utilise un dispositif de reproduction audio interne;
- la figure 3 représente un dispositif de réception et reproduction d'un service numérique audio/vidéo selon l'invention qui utilise un dispositif de reproduction audio externe;
- la figure 4 représente un dispositif de réception et reproduction d'un service numérique audio/vidéo selon l'invention dont le dispositif de reproduction estime un retard compensé dans la source;
- la figure 5, représente un dispositif de réception et reproduction d'un service numérique audio/vidéo selon l'invention dont le dispositif de réception estime et compense un retard;
- la figure 6, représente un dispositif de réception et reproduction d'un service numérique audio/vidéo selon l'invention dont le dispositif de reproduction estime et compense un retard;
- la figure 7, illustre un procédé d'estimation de retard pour les écrans à cristaux liquides selon l'invention;
- la figure 8, illustre un abaque représentant les temps de réponse de cristaux liquides pour différents niveaux de transition de gris;
- la figure 9, illustre un procédé de sélection manuelle de retard selon l'invention;
- la figure 10, illustre un procédé de sélection de retards pour différents formats vidéo ;
- la figure 11, illustre un dispositif d'estimation manuelle de retard selon l'invention;
- la figure 12, illustre un dispositif d'estimation semi-automatique de retard selon l'invention;
- la figure 13, illustre un procédé d'estimation de retard semi-automatique selon l'invention;
- la figure 14, représente un dispositif de réception et reproduction d'un service numérique audio/vidéo selon l'invention qui utilise un dispositif de reproduction audio externe, le dispositif de réception comprenant 2 modules de retard; et
- la figure 15, représente un dispositif de réception et reproduction d'un service numérique audio/vidéo selon l'invention, le dispositif de réception étant connecté à deux dispositifs de reproduction vidéo;

### 5. Description détaillée de l'invention

Les modes de réalisation vont être décrits dans le cadre particulier d'un service numérique audiovisuel. La source A/V est assimilée à un décodeur mais peut être tout autre type de source A/V (par exemple un lecteur DVD). Le dispositif de reproduction audiovisuel est assimilé à un téléviseur incluant un écran et une sortie audio (i.e. enceinte intégrée) mais peut également être tout autre type de dispositif de reproduction audiovisuel (par exemple un ordinateur). Le dispositif de reproduction audio peut être externe au téléviseur et assimilé à un dispositif comprenant un amplificateur relié à une ou plusieurs enceintes (par exemple un amplificateur audio d'un dispositif home-cinéma) mais peut également être tout autre type de dispositif de reproduction audio.

Certains circuits désentrelaceurs disposent d'entrées audio de compensation sur lesquelles on applique le même retard que sur la vidéo pour rester en phase. En revanche, dans le cas où l'utilisateur choisit d'utiliser le son provenant d'un dispositif de reproduction audio externe (par exemple type home cinéma), aucune compensation de retard n'est appliquée. Il paraît donc naturel de placer le module de synchronisation A/V dans le décodeur numérique, celui-ci étant la source des signaux A/V et devant par ailleurs être compatible avec des équipements A/V déjà présents sur le marché. Un des principes de l'invention est de fournir des moyens automatiques au téléviseur afin que celui-ci fasse connaître au décodeur la valeur du retard entre la vidéo à l'entrée du téléviseur et la vidéo affichée sur l'écran.

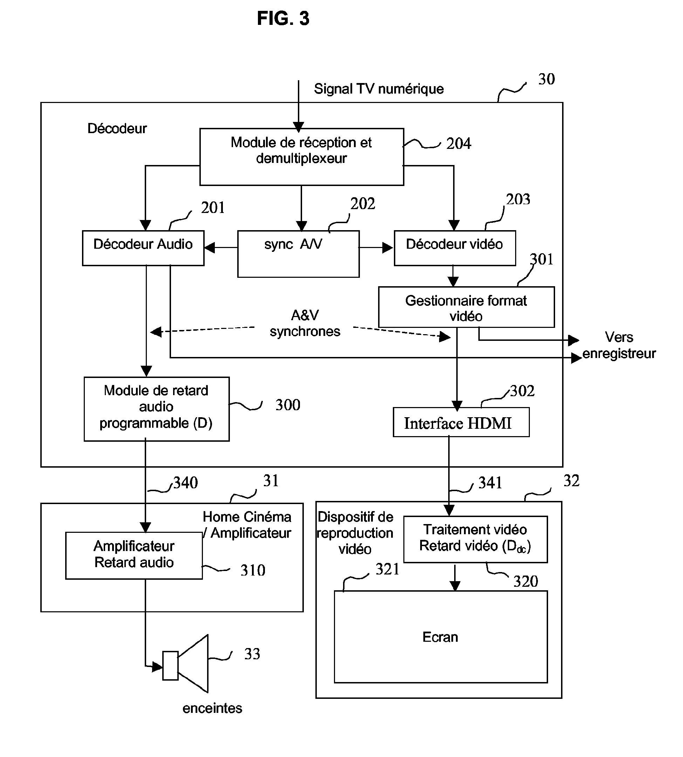

Les figures 2 et 3 représentent deux variantes d'un dispositif de réception et d'affichage d'un service numérique audiovisuel selon l'invention. Seuls les éléments essentiels du dispositif sont dessinés. La figure 2 représente un dispositif de service audiovisuel qui comprend un décodeur numérique 20 relié à un téléviseur 21 notamment par des liaisons 220, 221 et 222. Le décodeur 20 reçoit à son entrée un flux audiovisuel 22 codé (par exemple en MPEG). Ce flux A/V 22 est démultiplexé par un démultiplexeur 204 en au moins un signal audio et un signal vidéo. Le signal vidéo est alors décodé par un décodeur vidéo 200. Le signal audio, quant à lui, est décodé par un décodeur audio 201. Les deux flux sont synchronisés à l'aide du module de synchronisation A/V 202 qui communique avec les deux décodeurs 200 et 201. Le module de synchronisation A/V 202 est par ailleurs relié à une unité de traitement 203. Le décodeur vidéo 200 est relié au téléviseur 21 par une liaison DVI/HDMI 220 (Interface vidéo numérique et interface multimédia haute définition - « Digital Video Interface » et « High Definition Multimedia Interface » en anglais). Plus précisément le décodeur vidéo 200 est relié à un module de traitement vidéo 210 du téléviseur 21. Ce module de traitement est lui-même relié à un écran 211. Le décodeur audio est quant à lui relié à un dispositif de reproduction audio du téléviseur 212 par une liaison 222. Le module de synchronisation 202 est relié via l'unité 203 à une mémoire non volatile 213 (par exemple EDID EPROM - EDID : données d'identifications relatives à l'écran - « Extended Display Identification Data » en anglais) du téléviseur 21 par un bus 12C 221 utilisant par exemple le protocole de communication DDC (protocole permettant de récupérer des données relatives à l'écran - « Display Data Channel » en anglais).

La figure 3 représente un dispositif similaire dans lequel le flux audio est reproduit par un dispositif de reproduction audio externe 31 (par exemple un amplificateur d'un dispositif home cinéma). Ce dispositif 31 comprend un amplificateur audio 310 relié à des enceintes 33. Le décodeur 30 comprend des éléments similaires (notamment décodeur audio, décodeur vidéo, démultiplexeur, module de synchronisation A/V) à ceux du décodeur 20, éléments qui portent les mêmes références. Il comprend en outre un module de retard audio programmable 300, une interface HDMI 302 et un module de gestion de format vidéo 301. Il est relié à un téléviseur 32 comprenant un module de traitement vidéo 320 lui même relié à un écran 321. Le décodeur est relié au dispositif de reproduction audio externe 31 par une liaison 340, par exemple via une interface SPDIF (Interface numérique Sony Philips - « Sony/Philips Digital Interface » en anglais) et au téléviseur 32 via une liaison DVI/HDMI. Les deux solutions proposées (figures 2 et 3) ont pour objectif de compenser un retard D_{dc}, où D_{dc} = D_{d}+D_{c}, induit par des traitements vidéo (par exemple désentrelacement, conversion de formats, amélioration de la qualité de l'image ...) 320 210 et/ou un retard De dû à l'écran (par exemple le temps de réponse des cristaux liquides) 211. Le retard De peut lui-même être la somme de plusieurs retards tels que ceux définis dans le tableau ci-dessus. Dans la suite du document on note D, le retard global, i.e. D=D_{dc}+Dₑ. D_{dc} et De peuvent être fixes ou variables dans le temps, comme c'est le cas du retard De dans le cas des écrans à cristaux liquides dont le temps de réponse est variable de trame en trame. Dans le cas où l'écran n'introduit pas de retard alors D=D_{dc}. De même, D_{dc} peut être nul.

Selon l'invention, on applique au moins un retard programmable D sur le signal audio en le mémorisant soit sous sa forme compressée, soit sous sa forme décodée. Le retard D est appliqué sur le signal audio dans le module 300. Selon une variante de l'invention, le retard est directement appliqué sur le signal audio dans le module de synchronisation A/V 202 présent dans le décodeur. Il est de la responsabilité du décodeur d'appliquer la valeur D adéquate de retard dans le module de retard audio 300 ou dans le module de synchronisation A/V du décodeur 202 pour compenser le retard induit par les traitements vidéo et/ou le retard dû au type d'écran 210 320.

Selon l'invention, le retard D induit par le téléviseur 21 ou 32 peut varier en fonction du format de la vidéo d'entrée dont la gestion est assurée par le module 301. Ainsi, une nouvelle valeur de retard D peut être programmée dans le module de retard audio 300 ou dans le module de synchronisation A/V du décodeur 202 chaque fois que le format vidéo change si ce retard dépend du format vidéo. Ce retard est noté Dₓ, où x est le format vidéo auquel est associé le retard. La valeur du retard programmée peut également être une valeur globale D fonctionnant indépendamment du format de la vidéo d'entrée.

La solution proposée consiste donc à enrichir les protocoles de contrôle HDMI/DVI avec des paramètres qui indiquent les retards Dₓ par exemple pour différents formats vidéo ou bien le retard global D indépendamment du format de la vidéo d'entrée. Ces protocoles permettent aux écrans de partager avec le décodeur des informations quant à leurs caractéristiques et capacités. Selon ces protocoles, la source vidéo vient lire via le canal DDC 221 une mémoire non volatile 213 placée dans le téléviseur 21 ou 32 pour connaître par exemple la résolution, les polarités des signaux de synchronisation ainsi que des données colorimétriques. Ces données sont représentées à l'aide de descripteurs EDID qui sont définis dans le document EIA/CEA-861 B. Ils peuvent être fournis par les fabricants d'écrans et programmés dans la mémoire EDID EPROM 213.

L'invention consiste donc à ajouter des descripteurs d'information EDID autres que ceux déjà standardisés afin de stocker dans le téléviseur des informations caractéristiques des retards introduits soit par le traitement vidéo numérique du téléviseur (D_{dc}), soit par le temps de réponse de l'écran (De), soit par les deux (D ou Dₓ). L'information de retard pour chaque téléviseur 21 ou 32 équipé selon l'invention est stockée dans une mémoire non volatile du téléviseur 213. Ces informations peuvent inclure les 4 retards Dₓ correspondants aux 4 formats vidéo décrits précédemment (50 Hz entrée entrelacée, 50 Hz entrée progressive, 60 Hz entrée entrelacé, 60 Hz entrée progressive). On peut également envisager de stocker les retards relatifs à d'autres formats vidéo.

Selon l'invention, le décodeur récupère ces valeurs afin que le module de synchronisation A/V 202 ou le module de retard 300 synchronise les flux audio et vidéo. Les informations concernant les retards D_{dc} et De peuvent être fournies par le fabricant du téléviseur 21 ou 32 et peuvent être transmises par le téléviseur 21 32 au décodeur 20 sous forme électronique. Les informations de retard global D ou Dₓ doivent alors être transférées à la mise en marche du décodeur. On peut également de manière optionnelle transférer ces informations lors d'un changement de chaîne si cela est nécessaire ou sur demande sur décodeur.

Une solution alternative à l'utilisation du canal DDC est d'utiliser le protocole d'échange interactif CEC (« Consumer Electronics Control » en anglais) spécifié dans HDMI.

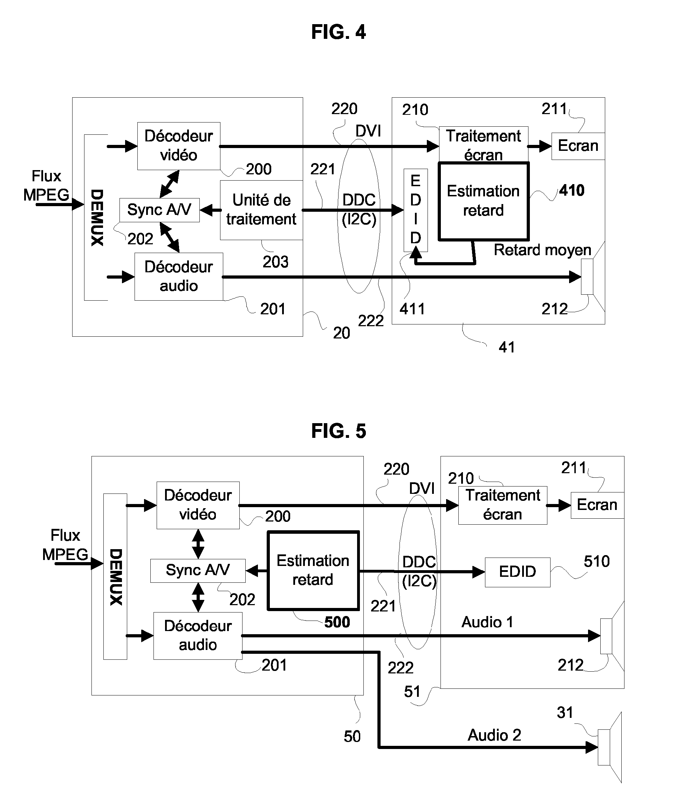

La figure 4 illustre un mode particulier de réalisation de l'invention. Le décodeur 20 est le même que celui décrit figure 2 et ne sera pas décrit davantage. Le téléviseur 41 comprend des éléments similaires au téléviseur 21 qui portent les mêmes références et ne seront donc pas décrits plus en détail. Le téléviseur comprend en outre un module d'estimation 410 d'un retard De. En effet, dans le cas des téléviseurs qui introduisent un retard variable dans le temps en fonction du type d'écran, il est nécessaire d'estimer ce retard. Ce retard De estimé est alors additionné au retard D_{dc} induit par les différents traitements vidéo (par exemple un désentrelacement). La valeur du retard total D est stockée dans une mémoire EDID EPROM 411 pour être utilisée par le module de synchronisation A/V 202 ou le module de retard 300 placé dans le décodeur 20. Ce retard est donc récupéré par le décodeur via la lien DDC 221 afin de synchroniser les flux audio et vidéo. On peut également envisager de stocker séparément dans la mémoire EDID EPROM les différents retards (D_{dc} et De), ces différents retards étant ensuite récupérés par le décodeur via la lien DDC 221. Pour estimer le retard variable De dû au type d'écran, on peut dans le cas des écrans à cristaux liquides utiliser le procédé d'estimation décrit plus loin dans le document.

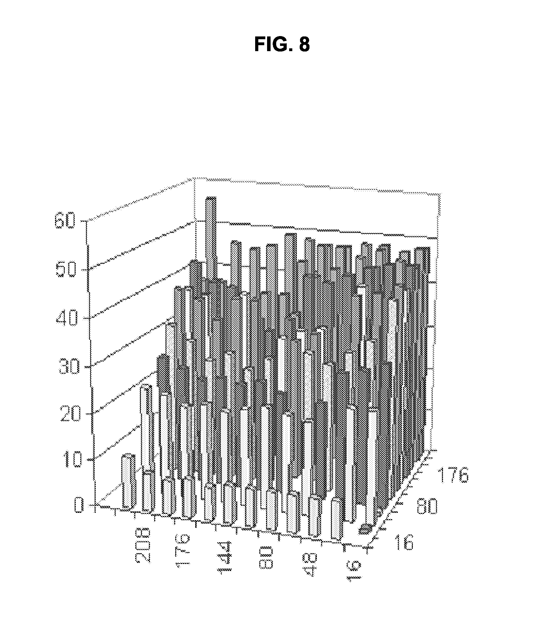

Dans un autre mode de réalisation représenté sur la figure 5, le retard lié à I 'écran De est estimé dans un module d'estimation 500 localisé dans l'unité de traitement du décodeur 50. Les éléments similaires aux figures précédentes portent les mêmes références et ne seront pas décrits davantage. Selon l'invention on propose donc de définir des descripteurs permettant de stocker dans la mémoire EDID EPROM de l'écran les données nécessaires à l'estimation du retard (par exemple les abaques tels que fournis par les fournisseurs de cristaux liquides et illustrés figure 8). Ces données sont alors récupérées via le lien 221 par le décodeur qui fera lui-même l'estimation du retard moyen dans le module 500. Pour cela, il peut utiliser le procédé d'estimation décrit plus loin dans le document.

Un des avantages des solutions présentées est de synchroniser les flux audio et vidéo lorsque l'on utilise un téléviseur et un dispositif de sortie audio externe 31 (par exemple chaîne HIFI, dispositif home cinéma).

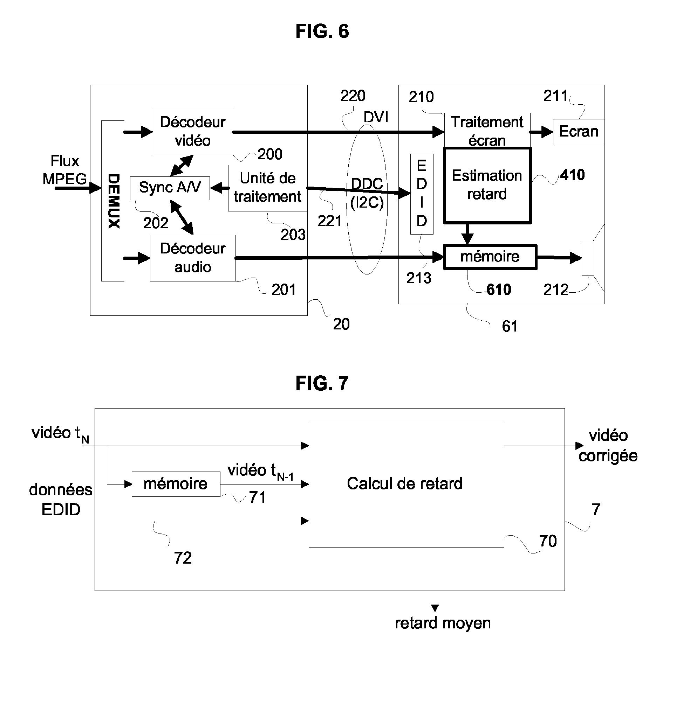

Dans un autre mode de réalisation illustré figure 6, le retard De lié à l'écran est également estimé dans le bloc 410 du téléviseur 61 comme précédemment. Cependant la synchronisation est directement effectuée dans le téléviseur. Dans ce cas, on peut utiliser une mémoire 610 dans le téléviseur qui tamponne les données audio et les restitue à l'utilisateur en fonction du retard moyen. Une mise en oeuvre de l'estimation du retard moyen est décrite ci-dessous.

La figure 7 illustre un dispositif selon l'invention d'estimation 7 de retard De pour des écrans à cristaux liquides. Le dispositif comprend une mémoire de trame 71 et un module de calcul de retard 70. La mémoire trame 71 permet de retarder la vidéo d'entrée (vidéo t_{N}) d'une trame (vidéo t_{N-1}). Le dispositif 7 peut utiliser la mémoire de trame 71 du dispositif d'accentuation. Le module de calcul de retard 70 calcule pour chaque pixel l'écart de niveaux de gris entre deux trames successives. Ce module utilise ensuite les abaques (figure 8) fournis par les fabricants de cristaux liquides. Ces abaques donnent les temps de réponse pour différentes transitions de niveaux de gris. Ils permettent ainsi d'estimer pour chaque pixel le temps de réponse entre deux trames. En faisant un histogramme sur tous les pixels on estime donc un retard moyen De (par exemple en faisant une moyenne pondérée qui tient compte du nombre de pixels ayant un temps de réponse donné) qui est utilisé par le dispositif de synchronisation A/V. Dans le cas où l'estimation du retard De est effectuée dans le décodeur (figure 5), ces abaques peuvent être stockées dans la mémoire EDID EPROM et récupérées par le décodeur via le lien DDC 221. Dans ce cas, le dispositif d'estimation de retard 7 récupère donc les données EDID via la liaison 72.

Les solutions suivantes proposent d'autres modes de réalisation permettant de faire connaître à la source vidéo les paramètres de retard D induits à la fois par les traitements vidéo et par l'écran de manière manuelle ou semi-automatique. Ces solutions sont notamment utiles lorsqu'il n'existe pas de liaison HDMI entre la source A/V et le dispositif de reproduction vidéo.

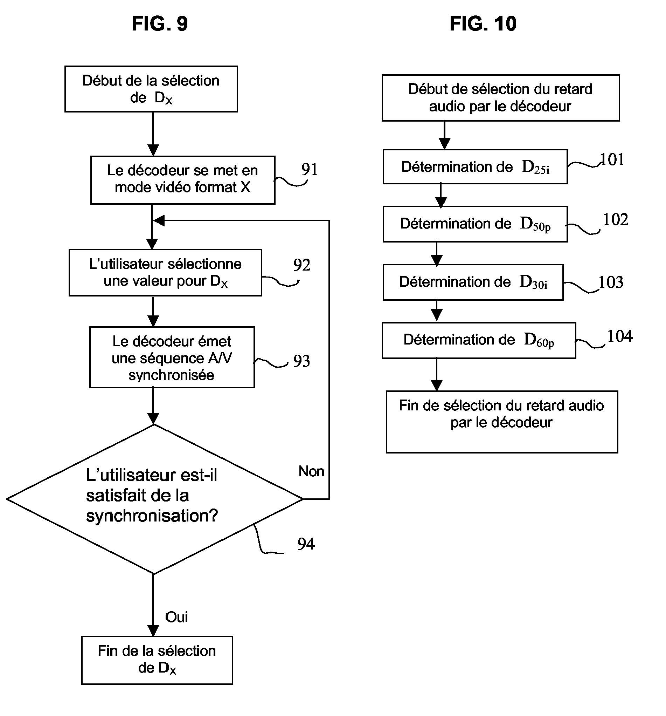

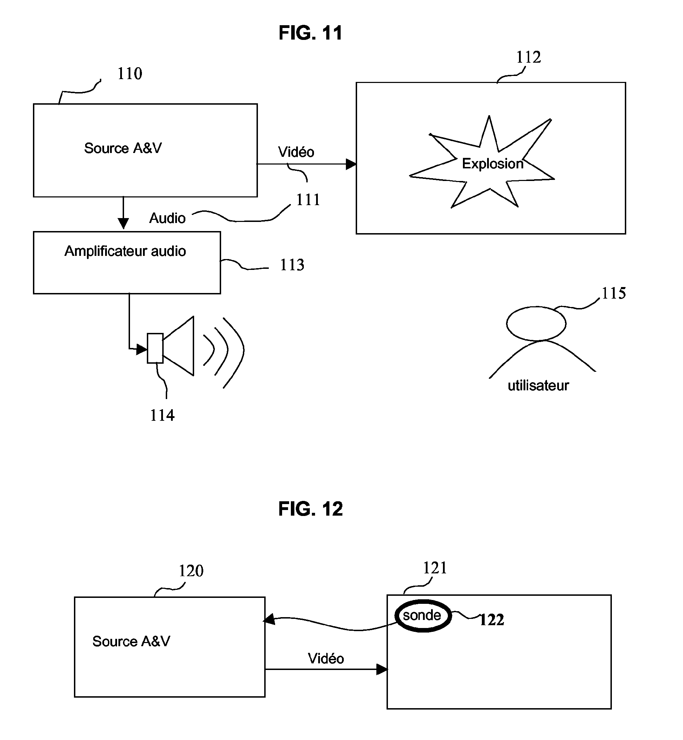

La figure 9 illustre un procédé de réglage manuel permettant à l'utilisateur de sélectionner de manière empirique des paramètres de retard à l'aide d'un menu. Le dispositif de sélection est présenté figure 11. Ce procédé est utile lorsque aucune information de retard n'est fournie par le fabricant. Dans ce cas, le décodeur 110 génère une séquence A/V permettant à l'utilisateur de synchroniser manuellement et finement le retard D. Selon l'invention, lors d'une étape 91, le décodeur 110 se met dans le format vidéo adéquat (noté X, par exemple entrelacé 50 Hz). Lors d'une étape 92, l'utilisateur 115 sélectionne alors une valeur de retard Dₓ dans le menu pour ce format. La valeur est programmée dans le module de retard audio du décodeur 300 ou dans le module de synchronisation A/V 202. Lors d'une étape 93, le décodeur émet alors la séquence A/V synchronisée 111 à l'aide de la valeur du retard sélectionnée. La vidéo est alors affichée sur l'écran 112. Le signal audio synchronisé est amplifié par l'amplificateur audio 113 et le son est reproduit à l'aide des enceintes 114. L'utilisateur en regardant l'écran 112 et en écoutant le son produit par les enceintes 114 peut juger de la qualité de la synchronisation. Lors d'une étape 94, l'utilisateur informe le décodeur à l'aide du menu si la synchronisation est assez précise selon lui. Si cela n'est pas le cas, le processus est alors répété avec une nouvelle valeur de retard Dₓ. Dans le cas où la synchronisation est satisfaisante, la sélection est terminée et la valeur de Dₓ est stockée dans le module de retard programmable 300 ou dans le module de synchronisation A/V 202.
Cette opération peut être répétée pour tout format vidéo afin de déterminer pour chacun d'entre eux le retard qui doit être appliqué sur le flux audio. Ce procédé est illustré figure 10. Les retards D₂₅ᵢ (relatif au format vidéo entrelacé 50 Hz), D₅₀ₚ (relatif au format vidéo progressif 50 Hz), D₃₀ᵢ (relatif au format vidéo entrelacé 60 Hz) et D₆₀ₚ (relatif au format vidéo progressif 50 Hz) déterminés, respectivement lors des étapes 101, 102, 103 et 104, sont successivement sélectionnés selon le procédé décrit figure 9.

Selon un autre mode de réalisation, le retard étant connu car par exemple fourni par le fabricant, l'utilisateur peut rentrer manuellement à l'aide d'un menu les valeurs de retard Dₓ à appliquer dans le module de retard 300 ou dans le module de synchronisation A/V 202 du décodeur par exemple pour différents formats vidéo. Ces valeurs peuvent être par exemple rentrées au moment de l'installation du dispositif de service numérique.

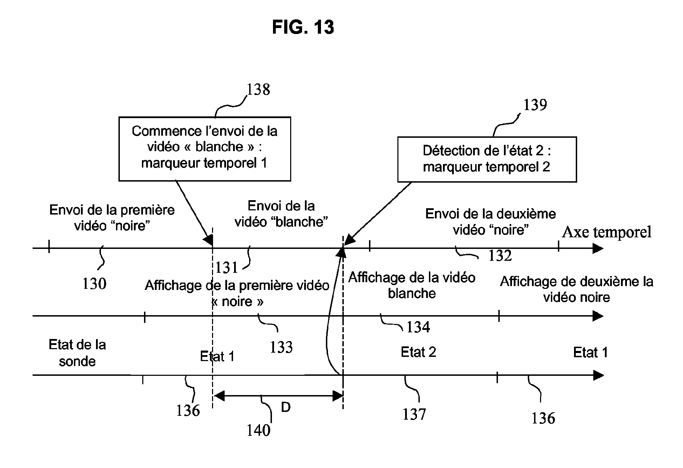

Selon un autre dispositif illustré par la figure 12, on utilise une sonde 122 fixée sur l'écran afin de détecter des caractéristiques de ce qui est affiché sur l'écran et de renvoyer ces informations vers le décodeur. Un tel procédé d'estimation semi-automatique de retard D est illustré figure 13.

Selon ce procédé le décodeur 120 génère une série d'images noires 130 (i.e. de niveaux de gris faibles), puis une seule image blanche 131 (i.e. de niveaux de gris élevés) et à nouveau une série d'images noires 132 qu'il envoie au téléviseur 121. La première série d'images noires est alors affichée 133 sur l'écran, puis l'image blanche 134 et enfin la deuxième série d'images noires 135. La sonde 122 est capable de détecter une image blanche sur l'écran et d'envoyer un message instantané au décodeur 120 pour l'informer de l'affichage 134 de cette image blanche. Le décodeur 120 calcule le temps qui s'est écoulé entre le moment 138 auquel l'image blanche a été envoyée par le décodeur et le moment 139 où elle est affichée sur l'écran du téléviseur 121. La sonde 122 est typiquement un dispositif qui est sensible à l'intensité lumineuse et qui peut être positionné contre l'écran, par exemple dans le coin gauche et en haut de l'écran ou bien au centre de l'écran. Elle est par ailleurs capable d'évaluer de manière instantanée l'intensité lumineuse sur une surface limitée de l'écran. La sonde 122 a 2 états logiques. Elle se trouve dans un premier état 136 quand le niveau d'intensité lumineuse détecté est en dessous d'un certain seuil (i.e. lors de l'affichage de la première série d'images noires) et dans un deuxième état 137 quand le niveau est au dessus du seuil (i.e. lors de l'affichage de la première série d'images blanches). Le seuil est déterminé de tel sorte que, lorsqu'une image noire est affichée, la sonde est dans le premier état et, quand une image blanche est affichée, la sonde est dans le deuxième état. On peut remplacer l'image noire par une image d'intensité lumineuse faible et l'image blanche par une image d'intensité élevée. Il suffit que la sonde soit capable de détecter le passage de l'une à l'autre. Son état logique peut être traduit en un signal électrique ayant 2 valeurs. Ce signal peut alors être récupéré par le décodeur. Le décodeur enregistre le temps 138 à partir duquel l'image blanche commence à être envoyée à l'écran et enregistre le temps 139 auquel la sonde détecte le passage du premier état au deuxième état. La différence D 140 entre ces 2 marqueurs temporels représente le retard induit par les traitements vidéo et l'écran. Cette opération peut être répétée pour divers formats vidéo afin d'avoir un ensemble de retards Dₓ pour tous les formats vidéo. Cette méthode est semi-automatique puisque, même si aucun menu n'est utilisé, l'utilisateur doit connecter la sonde au décodeur, l'appliquer contre l'écran et commencer le processus manuellement.

On peut également envisager d'avoir un écran bleu avec un carré noir affiché quelque part sur cet écran. La sonde 122 étant positionnée sur le carré noir, on envoie du blanc sur le carré noir afin que la sonde détecte le changement d'intensité lumineuse. La connaissance de la position de la sonde sur l'écran permet de mesurer plus finement le retard pour les écrans qui ne reproduisent pas tous les pixels simultanément (par exemple pour les écrans à balayage).

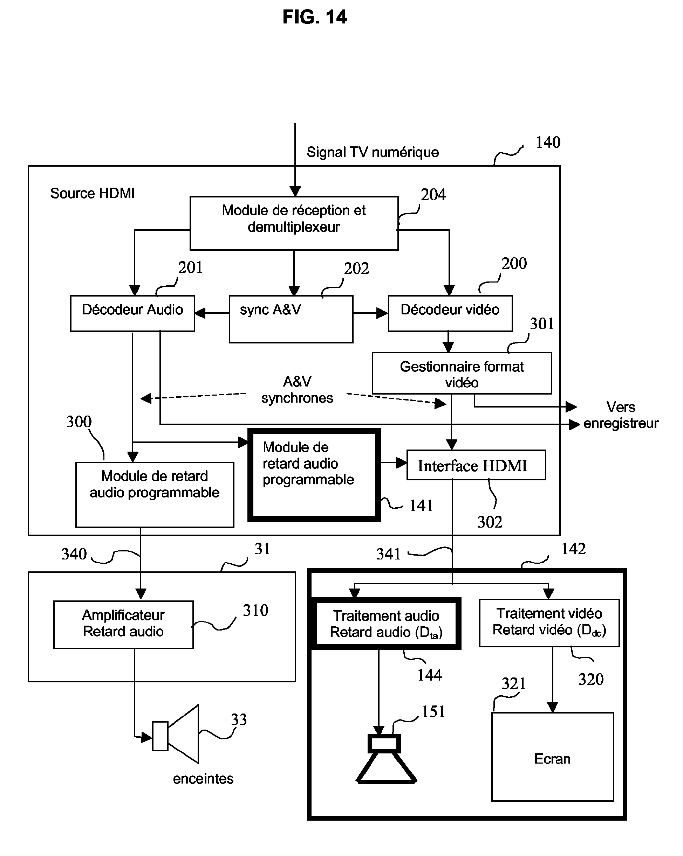

Une autre application de la présente invention est décrite sur la figure 14. Les éléments communs aux figures 2 et 3 portent les mêmes références et ne seront pas décrits davantage. Le décodeur 140 comprend un module de retard audio programmable supplémentaire 141. Ce deuxième module permet de synchroniser les flux audio et vidéo qui vont être reproduits par le même dispositif de reproduction 142 (par exemple un téléviseur). Ce téléviseur 142 comprend un module de traitement vidéo 320 qui induit un retard D_{dc} sur la vidéo. Il comprend également un module de traitement audio 144 qui induit un retard Dₜₐ sur le flux audio. Ce module est lui même connecté à des enceintes 151 intégrées au téléviseur. Afin que les flux audio et vidéo reproduits par les enceintes intégrées 151 et l'écran 321 soient synchronisés, le deuxième module de retard audio programmable 141 applique sur le flux audio sorti du décodeur un retard (D_{dc}-Dₜₐ). Dans cet exemple, on propose d'ajouter dans la table EDID 4 paramètres relatifs aux retards vidéo D_{dc} introduits par le dispositif de reproduction qui dépendent du format vidéo :
o 50 Hz entrée entrelacée
o 50 Hz entrée progressive
o 60 Hz entrée entrelacée
o 60 Hz entrée progressive
On ajoute également 4 paramètres relatifs au retard Dₜₐ introduit par la chaîne de traitement audio pour les 4 formats vidéo précédents. Les valeurs des retards peuvent être codées sur 1 octet afin de représenter des valeurs de retard variant de 0 à 255 millisecondes. Ainsi, dans le cas où le flux audio est reproduit via un dispositif externe 31 (par exemple SPDIF), la source applique un retard D_{dc} (module 300) sur le flux audio à la sortie du décodeur 201. Dans le cas où le flux audio est reproduit via le dispositif de reproduction HDMI (par exemple un téléviseur) 142, la source 140 lui applique un retard (D_{dc}-Dₜₐ) via le module 141 qui tient compte des retards vidéo et audio introduit par les différentes chaînes de traitement dudit dispositif HDMI 142.

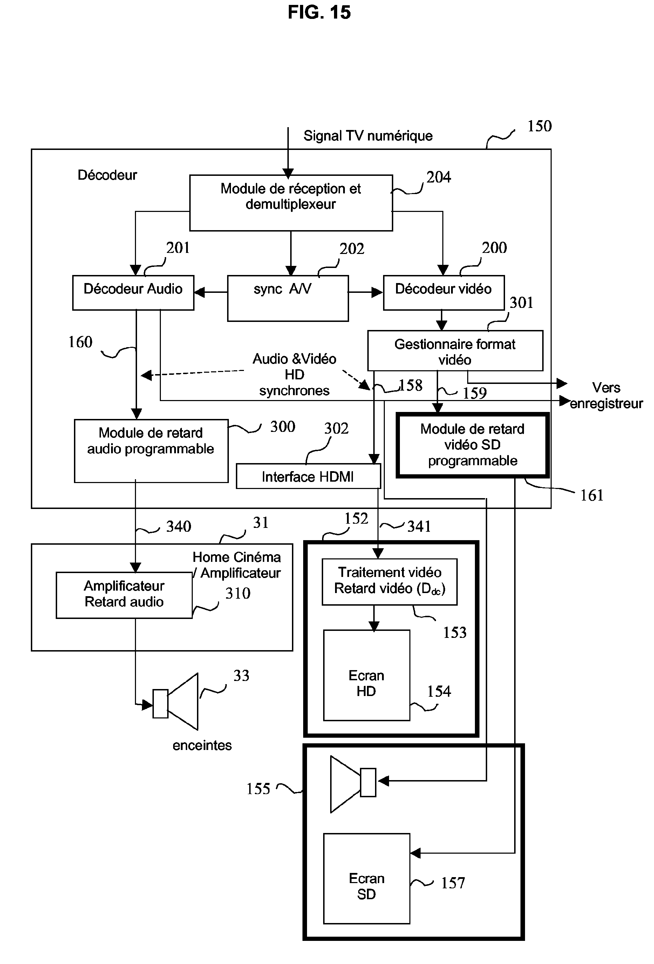

Une application différente est illustrée figure 15. Les éléments communs aux figures 2 et 3 portent les mêmes références et ne seront pas décrits davantage. Le décodeur 150 est branché à deux téléviseurs 152 et 155 localisés dans deux pièces différentes. Le téléviseur 152 est associé à un dispositif type home cinéma 31 pour le rendu audio (par exemple via une interface SPDIF). Le téléviseur 155 qui comprend notamment un écran 157 et qui est situé dans une autre pièce reçoit les flux audio et vidéo ensemble grâce à une liaison 162 (par exemple péritel ou RF analogique). Le téléviseur 152 comprend un module de traitement vidéo 153 introduisant un retard D_{dc} et un écran 154. Le téléviseur 155 , quant à lui, assure le maintien de la synchronisation des flux audio et vidéo qui lui sont transmis ensemble. Selon l'invention, on propose un dispositif ayant une seule sortie audio qui soit synchronisée avec l'une quelconque des sorties vidéo. La solution selon l'invention consiste, à synchroniser dans le décodeur le flux audio avec la première sortie vidéo 158 comme cela a déjà été décrit en référence à la figure 3 (c'est à dire en appliquant un retard de compensation sur l'audio). On rajoute un second module de retard programmable 161 qui va appliquer sur la deuxième sortie vidéo 159 le même retard D= D_{dc} que sur la sortie audio afin que la deuxième sortie vidéo 159 soit synchrone avec la sortie audio 160. Cette solution permet notamment d'utiliser le deuxième téléviseur 155 dans une autre pièce avec la sortie audio de ce même téléviseur et de n'avoir qu'une seule et même sortie audio 160 qui fonctionne avec les deux sorties vidéo 158 et 159.

L'invention décrite dans le cadre des protocoles de communication DVI et HDMI pourrait être étendue à n'importe quel protocole de contrôle développé dans le futur pourvu qu'il prévoit de pouvoir échanger de telles données de retard ou de données permettant de calculer des retards dans le décodeur (par exemple des abaques).

L'invention est décrite dans le cadre de la synchronisation de flux audio et vidéo d'un service numérique, dans le cas où l'écran introduit un retard alors que la partie audio du service numérique est associée à un processus instantané. Elle peut être généralisée à n'importe quel type de dispositif de reproduction de n'importe quel service numérique, ledit service étant séparé en différentes parties traitées par différents dispositifs de reproduction, chacun d'entre eux appliquant des retards spécifiques sur la partie du service qu'il traite. Dans ce cas, la possibilité de communiquer le retard spécifique du dispositif de reproduction au dispositif source permet à ce dernier de synchroniser entre elles toutes les parties du service numérique pour une bonne reproduction du service complet.

## Revendications

1. Dispositif de reproduction de données (21, 32, 41, 51, 61, 142, 152) correspondant à au moins un service numérique comprenant des moyens pour recevoir des données constituant au moins une partie d'un service numérique provenant d'un dispositif source de services numériques (20, 30, 50, 140, 150), des moyens pour traiter (210, 320, 153) au moins une partie des données reçues, des moyens (211, 321, 154) pour reproduire une sortie d'au moins une partie du service numérique, le temps de traitement et de reproduction des données introduisant un retard dans la sortie des données reproduites,
**caractérisé en ce que** le dispositif comprend en outre des moyens de communication (213, 221) pour informer le dispositif source du retard introduit.

2. Dispositif selon la revendication 1, **caractérisé en ce que** le dispositif de reproduction est un téléviseur, le service numérique est un service audiovisuel, et les données traitées sont des données vidéo organisées en trames et **en ce qu'**un des moyens pour reproduire une sortie d'au moins une partie du service numérique est un écran.

3. Dispositif selon la revendication 1 ou 2, **caractérisé en ce que** un des moyens pour traiter (210, 320, 153) au moins une partie des données reçues est un désentrelaceur.

4. Dispositif selon l'une des revendications 1 à 3, **caractérisé en ce que** le dispositif de reproduction comporte une mémoire non volatile permettant de stocker une valeur dudit retard.

5. Dispositif selon la revendication 4, **caractérisé en ce que** la mémoire non volatile est une mémoire EPROM (213).

6. Dispositif selon l'une des revendications 1 à 5, **caractérisé en ce qu'**une valeur dudit retard se présente sous la forme d'un descripteur EDID.

7. Dispositif selon l'une des revendications 1 à 6, **caractérisé en ce que** les moyens de communication pour informer le dispositif source du retard introduit comprennent une liaison utilisant le protocole DDC ou le protocole CEC.

8. Dispositif agissant comme une source de services numériques (20, 30, 50, 140, 150), comprenant des moyens pour sortir des données constituant une première partie d'un service numérique, des seconds moyens pour sortir des données constituant une deuxième partie du service numérique, des moyens pour communiquer avec un dispositif de reproduction (21, 32, 41, 51, 61, 142, 152) des données constituant la première partie du service numérique, **caractérisé en ce qu'**il comprend en outre des moyens (202, 300, 141, 150) pour appliquer un retard programmable sur les données de sortie constituant la deuxième partie du service numérique, des moyens pour recevoir de la part du dispositif de reproduction des données constituant la première partie du service numérique une indication de retard et des moyens pour programmer les moyens pour appliquer un retard programmable conformément à l'indication reçue de retard.

9. Dispositif selon la revendication 8, **caractérisé en ce que** le dispositif de reproduction comprend un écran.

10. Dispositif selon l'une des revendications 8 ou 9, **caractérisé en ce que** le dispositif agissant comme une source de services numériques est un décodeur numérique ou un lecteur DVD.

11. Dispositif selon l'une des revendications 8 à 10, **caractérisé en ce que** les données constituant la première partie du service numérique sont des données vidéo et les données constituant la deuxième partie du service numérique sont des données audio.

12. Dispositif selon l'une des revendications 8 à 10, **caractérisé en ce que** les données constituant la première partie et la deuxième partie du service numérique sont des données vidéo.

13. Dispositif selon l'une des revendications 8 à 12, **caractérisé en ce que** les données constituant la première partie du service numérique sont des données vidéo au format de définition standard et la deuxième partie du service numérique sont des données vidéo au format haute définition.

14. Dispositif selon l'une quelconque des revendications 8 à 13, **caractérisé en ce que** les moyens pour appliquer un retard programmable compensent un retard dû à un ou plusieurs éléments suivants des moyens de reproduction:
- un module de désentrelacement des données vidéo (10) ;
- un contrôleur de format (10) ;
- un contrôleur d'écran (11);
- un écran (12).

15. Dispositif selon l'une quelconque des revendications 8 à 14, **caractérisé en ce que** les moyens pour appliquer un retard programmable contiennent une mémoire qui stocke temporairement les données constituant la deuxième partie du service numérique avant de les restituer conformément à l'indication de retard reçue.

16. Méthode de synchronisation de deux parties d'un service numérique dans un système comprenant un dispositif de source selon l'une des revendications 8 à 14 (20, 30, 50, 140, 150) et au moins un dispositif de reproduction selon l'une des revendications 1 à 7 (1, 21, 32, 41, 51, 61, 142, 152), où le dispositif source comprend des premiers moyens pour sortir des données constituant la première partie du service numérique, des second moyens pour sortir les données constituant la deuxième partie du service numérique, des moyens pour communiquer avec le dispositif de reproduction des données constituant la première partie du service numérique, des moyens pour appliquer un retard programmable (202, 300, 141, 150) sur les données de sortie constituant la deuxième partie du service numérique,
et où le dispositif de reproduction comprend des moyens pour recevoir les données constituant au moins une première partie du service numérique provenant du dispositif source de services numériques, des moyens pour traiter (210, 320, 153) au moins une partie des données reçues pour reproduire au moins une partie du service numérique,
comprenant les étapes suivantes:
- au niveau du dispositif de reproduction, transmettre au dispositif source le retard total introduit par le dispositif de reproduction lors du traitement et de la reproduction des données reçues constituant au moins une première partie du service numérique ; et
- au niveau du dispositif source, programmer le retard programmable, en utilisant les indications de retard reçues, pour retarder la sortie des données constituant la deuxième partie du service numérique.

17. Méthode selon la revendication 16, **caractérisée en ce qu'** une partie du retard est due aux caractéristiques de l'écran et peut être estimée pour chaque trame dans le cas des écrans à cristaux liquides selon les étapes suivantes :
- Calcul pour chaque pixel de l'écart de tension entre deux trames successives.
- Estimation pour chaque pixel du temps de réponse entre deux trames à partir .
- Création d'un histogramme des retards sur l'ensemble des pixels
- Calcul d'un retard moyen à partir dudit histogramme.

18. Méthode selon la revendication 16 ou 17, **caractérisée en ce que** les données constituant la première partie du service numérique sont des données vidéo et les données constituant la deuxième partie du service numérique sont des données audio.

19. Méthode selon la revendication 16 ou 17, **caractérisée en ce que** les données constituant la première partie du service numérique sont des données vidéo au format haute définition et les données constituant la deuxième partie du service numérique sont des données vidéo au format de définition standard.
